# EUROPEAN PATENT SPECIFICATION

(11) **EP 2 728 133 B1**
(45) Date of publication and mention of the grant of the patent: **18.05.2016**
(21) Application number: 12805070.5
(22) Date of filing: 28.06.2012
(51) Int. Cl.: F01N 3/08, B01D 53/94, B01J 19/08, F01N 3/28

(54) **PLASMA GENERATION DEVICE**
PLASMAERZEUGUNGSVORRICHTUNG
DISPOSITIF DE PRODUCTION DE PLASMA

(30) Priority: 30.06.2011 JP 2011146772
(43) Date of publication of application: 07.05.2014
(73) Proprietor: Imagineering, Inc., Kobe-shi, Hyogo 650-0047 (JP)
(72) Inventor: IKEDA Yuji, Kobe-shi Hyogo 650-0047 (JP)
(74) Representative: Smith, Matthew
(86) International application number: PCT/JP2012/066502
(87) International publication number: WO 2013/002315

(56) References cited:
- EP-A1- 1 136 668
- JP-A- 10 169 431
- JP-A- 2002 256 851
- JP-A- 2002 256 851
- JP-A- 2002 336 653
- JP-A- 2002 339 731
- JP-A- 2002 540 331
- JP-A- 2007 113 570

## Description

### TECHNICAL FIELD

The present invention relates to a plasma generation device that generates plasma upstream of a purification catalyst that purifies exhaust gas of an engine.

### BACKGROUND ART

Conventionally, there is known a plasma generation device for generating plasma upstream of a purification catalyst that purifies exhaust gas of an engine. As a plasma generation device of this kind, Japanese Unexamined Patent Application, Publication No. 2009-275555 discloses a plasma processing device for generating plasma upstream of an insulating honeycomb that supports a catalyst.

More particularly, the plasma processing device disclosed by Japanese Unexamined Patent Application, Publication No. 2009-275555 is provided with an electrically-conducting honeycomb upstream of the insulating honeycomb and a discharge electrode that forms a pair of electrodes along with the electrically-conducting honeycomb. The plasma processing device is adapted to generate plasma by applying a pulse voltage between the electrically-conducting honeycomb and the discharge electrode. In the plasma processing device described above, a honeycomb structure adapted to purify a target gas partly forms the electrically-conducting honeycomb. As a result, it is possible to increase the temperature of the electrically-conducting honeycomb by applying thereto pulses for a short period of time at a power saving level. The heat can be utilized to activate a catalyst of the insulating honeycomb, thereby promoting the purification of the target gas.

Documents EP1136668 A1 and JP2002-256851 describe further plasma generation devices for generating plasma upstream of a purification catalyst of an engine.

### THE DISCLOSURE OF THE INVENTION

### PROBLEMS TO BE SOLVED BY THE INVENTION

By causing the plasma to contact with the purification catalyst, it is possible not only to heat the purification catalyst by the plasma, but also to decrease the activation temperature of the purification catalyst by active species generated in a region of the plasma. This means that making the plasma contact with the purification catalyst is effective for promptly activating the purification catalyst.

However, in a conventional plasma generation device, although the exhaust gas causes the plasma upstream of the purification catalyst to drift toward a side of the purification catalyst, the pressure of the plasma causes the plasma to diffuse in directions other than a flow direction of the exhaust gas. Therefore, the plasma cannot make contact with the purification catalyst effectively.

The present invention has been made in view of the above described circumstances, and it is an object of the present invention, in a plasma generation device that generates plasma upstream of a purification catalyst that purifies exhaust gas of an engine, to reduce time required for the purification catalyst to be activated by causing the plasma to effectively contact with the purification catalyst.

### MEANS FOR SOLVING THE PROBLEMS

In accordance with a first aspect of the present invention, there is provided a plasma generation device for generating plasma upstream of a purification catalyst that purifies exhaust gas of an engine in an exhaust passage provided with the purification catalyst as defined in claim 1.

According to the first aspect of the present invention, the exhaust gas passes through the internal passage formed in the passage formation member. The plasma generation part generates the plasma in the internal passage. The internal passage is formed in the passage formation member that is accommodated in the exhaust passage. The internal passage is narrower than the upstream of the purification catalyst in the exhaust passage. Furthermore, the internal passage of the passage formation member is located in the vicinity of or abuts on the purification catalyst at the outlet part of the internal passage. Accordingly, the plasma generated by the plasma generation part blows out from the outlet of the internal passage and reaches the purification catalyst.

In accordance with a second aspect of the present invention, in addition to the first aspect of the present invention, a plurality of the passage formation members are arranged in parallel with one another with respect to a cross section of the exhaust passage upstream of the purification catalyst in the exhaust passage. The plasma generation part generates the plasma in the internal passage of each passage formation member.

According to the second aspect of the present invention, since the plurality of the passage formation members are arranged in parallel with one another with respect to the cross section of the exhaust passage, an area which the plasma blows on increases upstream of the purification catalyst.

In accordance with a third aspect of the present invention, in addition to the first or the second aspect of the present invention, the plasma generation part causes a discharge to occur in the internal passage, while supplying high frequency energy to discharge plasma generated owing to the discharge, thereby enlarging the discharge plasma.

According to the third aspect of the present invention, since the high frequency energy is supplied to the discharge plasma generated in the plasma generation part so as to enlarge the discharge plasma, the plasma is stably generated under a circumstance that the exhaust gas is flowing.

In accordance with a fourth aspect of the present invention, in addition to any one of the first to third aspects of the present invention, the plasma generation part causes a discharge to repeatedly occur during a period of supplying the high frequency energy.

According to the fourth aspect of the present invention, during the supply period of the high frequency energy, i.e., a period to sustain the plasma by way of the high frequency, the discharger causes the discharge to repeatedly occur. Free electrons that trigger the plasma generation are repeatedly emitted.

In accordance with a fifth aspect of the present invention, in addition to any one of the first to fourth aspects of the present invention, the plasma generation part generates the plasma at a location in the vicinity of the purification catalyst in the internal passage.

According to the fifth aspect of the present invention, since the plasma generation part generates the plasma at the location in the vicinity of the purification catalyst in the internal passage, energy of the plasma is effectively transferred to the purification catalyst.

In accordance with a sixth aspect of the present invention, in addition to any one of the first to fifth aspects of the present invention, the plasma generation part generates the plasma by emitting an electromagnetic wave to the internal passage, while the passage formation member includes an insulating inner cylindrical member formed inside with a region in which the plasma generation part generates the plasma and an electrically-conducting outer cylindrical that accommodates the inner cylindrical member.

According to the sixth aspect of the present invention, the insulating inner cylindrical member and the electrically-conducting outer cylindrical member are employed as the passage formation member. The outer cylindrical member prevents the electromagnetic wave for generating the plasma from leaking outwardly from the passage formation member. While, the inner cylindrical member narrows the cross section of the passage in which the plasma is generated and confines energy of the plasma.

In accordance with a seventh aspect of the present invention, in addition to any one of the first to sixth aspects of the present invention, the plasma generation part generates the plasma by emitting an electromagnetic wave to the internal passage, while the internal passage of the passage formation member is provided with electrically-conducting mesh members for trapping the electromagnetic wave emitted by the plasma generation part in a region in which the plasma is generated.

According to the seventh aspect of the present invention, since the electrically-conducting mesh members are provided in the internal passage of the passage formation member, the electromagnetic wave energy is trapped in the internal passage.

### EFFECT OF THE INVENTION

According to the present invention, the plasma is generated in the internal passage narrower than the exhaust passage, thereby preventing the plasma from diffusing toward directions other than the flow direction of the exhaust gas and causing the plasma to blow out from the outlet of the internal passage toward a side of the purification catalyst. Accordingly, it is possible to cause the plasma to effectively contact with the purification catalyst and to reduce time required for activation of the purification catalyst.

According to the fourth aspect of the present invention, since the free electrons that trigger the plasma generation are repeatedly emitted during the supply period of the high frequency energy, even in a case in which the exhaust gas blows off the plasma, the plasma can be generated again.

According to the fifth aspect of the present invention, since the plasma is generated at the location in the vicinity of the purification catalyst in the internal passage, a penetration length of the plasma into the purification catalyst increases, and catalyst metal increases in amount that contacts the plasma in the purification catalyst. Accordingly, it becomes possible to further reduce the time required for activation of the purification catalyst.

According to the sixth aspect of the present invention, the insulating inner cylindrical member having is provided inside of the outer cylindrical member that traps the electromagnetic wave, thereby narrowing the cross section of the passage in which the plasma is generated so as to confine the plasma energy. Accordingly, since the plasma generated in the internal passage hardly diffuses, it becomes possible to cause the plasma to effectively blow out toward the side of the purification catalyst.

According to the seventh aspect of the present invention, since the electrically-conducting mesh members are provided in the internal passage of the passage formation member, the electromagnetic wave energy is trapped in the internal passage. Accordingly, it becomes possible to generate high density plasma.

### BRIEF DESCRIPTION OF THE DRAWINGS

Fig. 1 is a schematic configuration diagram of a plasma generation device according to an embodiment;
Fig. 2 is a block diagram of the plasma generation device according to the embodiment;
Fig. 3 is a diagram of a passage formation member of the plasma generation device according to the embodiment viewed from a flow direction of exhaust gas in an exhaust passage;
Fig. 4 is a side view of the passage formation member of the plasma generation device according to the embodiment;
Fig. 5 is a time chart illustrating relationship of a microwave emission period and discharge timings in the plasma generation device according to a first modified example of the embodiment; and
Fig. 6 is a side view of the passage formation member of the plasma generation device according to a third modified example of the embodiment.

### BEST MODE FOR CARRYING OUT THE INVENTION

In the following, a detailed description will be given of embodiments of the present invention with reference to drawings. It should be noted that the following embodiments are merely preferable examples, and do not limit the scope of the present invention, applied field thereof, or application thereof.

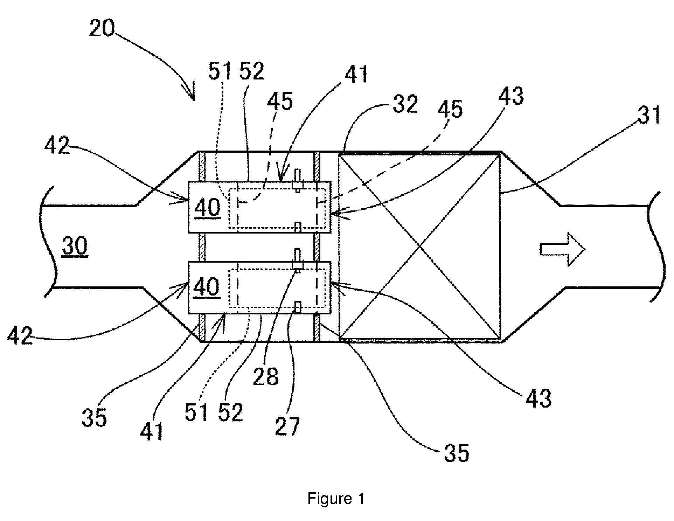

The present embodiment is directed to a plasma generation device 20 that generates plasma upstream of a purification catalyst 31 (three way catalyst) for purifying exhaust gas emitted from an engine (not shown) in an exhaust passage 30 formed with the purification catalyst 31. As shown in Fig. 1, the plasma generation device 20 is provided along with the purification catalyst 31 in an accommodation member 32 that constitutes a part of the exhaust passage 30.

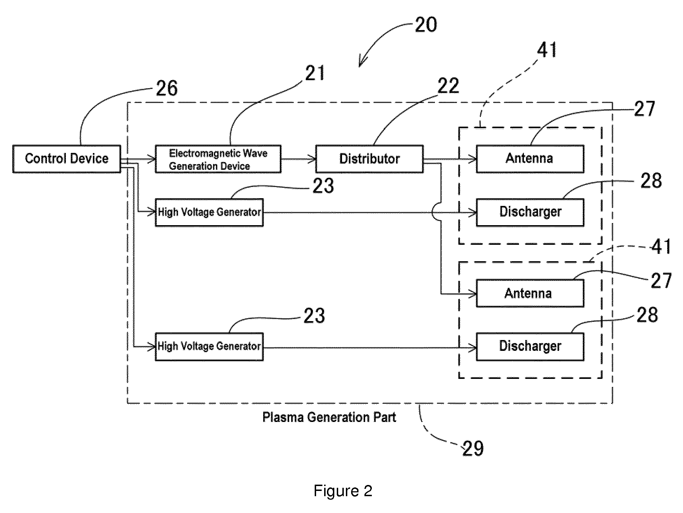

As shown in Fig. 2, the plasma generation device 20 includes a plasma generation part 29 and passage formation members 41. The passage formation member 41 includes an inner cylindrical member 51 and an outer cylindrical member 52 that accommodates the inner cylindrical member 51. In the passage formation member 41, an internal passage 40 through which the exhaust gas passes through is formed along the inner cylindrical member 51 and the outer cylindrical member 52.

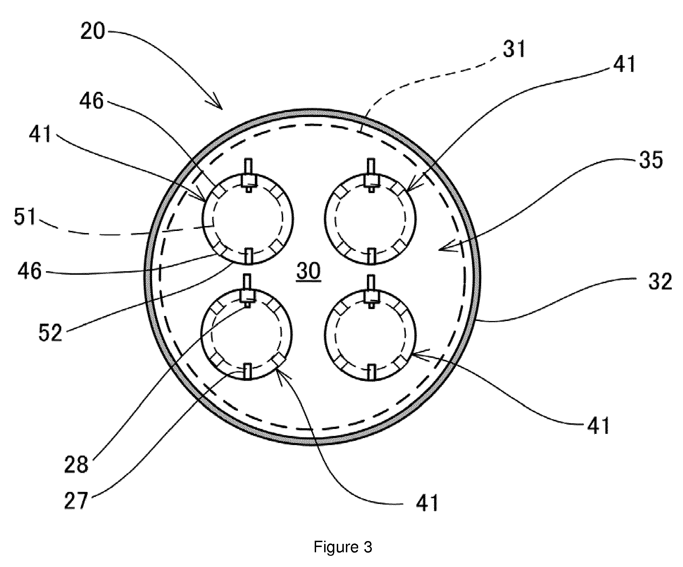

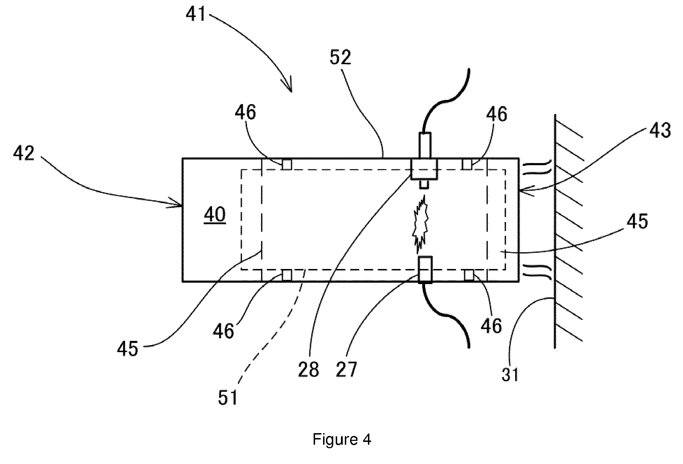

As shown in Fig. 3 and Fig. 4, the plasma generation device 20 is provided with, for example, four pairs of the inner cylindrical members 51 and the outer cylindrical members 52. The four pairs of the inner cylindrical members 51 and the outer cylindrical members 52 are arranged in parallel with one another with respect to a cross section of the exhaust passage 30 immediately upstream of the purification catalyst 31 in the exhaust passage 30.

The inner cylindrical member 51 is a cylindrical shaped member made of insulating material such as, for example, ceramic or glass. According to the present embodiment, the plasma generation part 29 emits a microwave and generates microwave plasma in the internal passage 40 in the inner cylindrical member 51. As a shape of the inner cylindrical member 51, other shapes such as a polygonal cylinder may be employed.

The outer cylindrical member 52 is made of an electrically-conducting metal material. The outer cylindrical member 52 is, as a whole, in the form of a cylindrical shape. Viewed from an axial direction (viewed from a lateral direction in Fig. 4), the outer cylindrical member 52 has a circular shape. As the shape of the outer cylindrical member 52, other shapes such as a polygonal cylindrical shape may be employed.

The outer cylindrical member 52 is adapted to trap the microwave emitted by the plasma generation part 29, which will be described later, in a region of the internal passage 40 where the microwave plasma is generated, in cooperation with mesh members 45, which will be described later. The mesh member 45 is similarly made of an electrically-conducting metal material.

According to the present embodiment, four passage formation members 41 are respectively attached to a couple of disk-like shaped fixing members 35 fixed to wall surfaces of the exhaust passage 30 at both edges thereof. Each passage formation member 41 is attached to the fixing members 35 in an attitude such that an inlet 42 of the internal passage 40 faces toward an upstream side of the exhaust gas and an outlet 43 of the internal passage 40 faces toward a downstream side. In the passage formation member 41, the outer cylindrical member 52 is fixed to the fixing members 35, and the inner cylindrical member 51 is fixed to the outer cylindrical member 52 via spacers 46.

The passage formation member 41 is provided in the vicinity of the purification catalyst 31 at an outlet part of the internal passage 40. Therefore, the exhaust gas flow causes the microwave plasma generated by the plasma generation part 29 to blow out from the outlet 43 of the internal passage 40 and to reach the purification catalyst 31. In the passage formation member 41, the outlet part of the internal passage 40 may abut on the purification catalyst 31.

The internal passage 40 is provided with the mesh members 45. The mesh members 45 are members made of electrically-conducting metal material, as described above. The mesh members 45 are respectively arranged on sides of the inlet 42 and the outlet 43 of the internal passage 40. In total, there are provided two mesh members 45. Each mesh member 45 is arranged along a cross section of the internal passage 40 and fixed to an inner peripheral surface of the outer cylindrical member 52. The two mesh members 45 are arranged in a manner such that an antenna 27 and a discharger 28, which will be described later, are sandwiched therebetween.

The mesh members 45 traps the microwave emitted by the plasma generation part 29 in the internal passage 40 at a region where the microwave plasma is generated in cooperation with the passage formation member 41, while allowing the exhaust gas and the plasma to pass through the internal passage 40.

The plasma generation part 29 is a device for generating the plasma in the internal passage 40 at a start-up time of the engine. As shown in Fig. 2, the plasma generation part 29 is equipped with an electromagnetic wave generation device 21, a distributor 22 (a branching filter), a plurality of high voltage generators 23, a plurality of the antennae 27, and a plurality of the dischargers 28. The high voltage generator 23, the antenna 27, and the discharger 28 are provided for each passage formation member 41. The distributor 22 distributes the microwave outputted from the electromagnetic generation device 21 to the antenna 27 of every passage formation member 41. In each passage formation member 41, the microwave plasma is generated by irradiating the discharge plasma generated by the discharger 28 which has received a high voltage pulse from the high voltage generator 23 with the microwave outputted from the electromagnetic wave generation device 21 and emitted from the antenna 27. In Fig. 2, the high voltage generators 23, the antennae 27, and the dischargers 28 corresponding to only two passage formation members 41 are shown, and the rest is omitted for clarity.

More particularly, the electromagnetic wave generation device 21 is adapted to generate the microwave by means of a semiconductor oscillator (not shown). The electromagnetic wave generation device 21, upon receiving an electromagnetic wave drive signal from a control device 26, repeatedly outputs a microwave pulse at a predetermined duty cycle. The electromagnetic wave drive signal is a pulse signal, and the electromagnetic wave generation device 21 repeatedly outputs the microwave pulse during a period of time of the pulse width of the electromagnetic wave drive signal. As the electromagnetic wave generation device 21, an oscillator such as a magnetron may be employed in place of the semiconductor oscillator.

The distributor 22 includes an input terminal and a plurality of output terminals provided for respective antennae 27. The input terminal is connected to the electromagnetic wave generation device 21. Each output terminal is connected to the corresponding antenna 27.

Each of the high voltage generators 23 is, for example, an ignition coil. Each of the high voltage generators 23 is connected to the corresponding discharger 28. Each of the high voltage generators 23, upon receiving a discharge signal from the control device 26, outputs the high voltage pulse.

The antenna 27 is formed in a shape of a rod. The antenna 27 is attached to a lower part of the inner cylindrical member 51 so that an emission location (a radiation location) of the microwave is pointed toward inside of the inner cylindrical member 51.

The discharger 28 is, for example, an ignition plug. The discharger 28 is attached to an upper part of the inner cylindrical member 51 so that a discharge gap between a central electrode and a ground electrode is pointed toward inside of the inner cylindrical member 51.

### <Operation of Plasma Generation Device>

An operation of the plasma generation device 20 will be described hereinafter. When the control device 26 receives a start instruction from the electronic control device (what is called ECU) that controls the engine, the plasma generation device 20 performs a plasma generation operation of generating the microwave plasma in the exhaust passage 30. The electronic control device outputs the start instruction at the start-up time of the engine.

The engine may be installed in a vehicle having the engine as an only drive source, or may be installed in a hybrid vehicle having the engine and a motor as drive sources. In case of the hybrid vehicle, the engine is started up in the wake of switching the drive source from the motor to the engine when a load changes from its low condition to its high condition, for example.

The control device 26, upon receiving the start instruction, outputs the electromagnetic wave drive signal and the discharge signal. The electromagnetic wave drive signal is outputted to the electromagnetic wave generation device 21. The discharge signal is outputted to every high voltage generator 23.

The electromagnetic wave generation device 21, upon receiving the electromagnetic wave drive signal, starts to repeatedly output the microwave pulse at the predetermined duty cycle. The distributor 22 distributes the microwave pulse inputted from the electromagnetic wave generation device 21 to every antenna 27. Meanwhile, each high voltage generator 23 outputs the high voltage pulse to the corresponding discharger 28.

In each passage formation member 41, the microwave pulse is supplied to the antenna 27, and the high voltage pulse is supplied to the discharger 28. Simultaneously with the start of the microwave emission from the antenna 27, a spark discharge is caused to occur at the discharge gap of the discharger 28. In association with the spark discharge, free electrons are emitted from constituent molecules of the exhaust gas, and the free electrons receive the microwave energy and accelerate. The free electrons collide with ambient gas molecules and ionize the gas molecules. Free electrons emitted owing to the ionization also receive the microwave energy, accelerate, and ionize ambient gas molecules. Thus, in the plasma generation part 29, gas molecules are ionized in an avalanche-like manner, and comparatively large microwave plasma is generated. The microwave plasma is sustained throughout a period while the microwave pulse is repeatedly emitted from the antenna 27.

Each plasma generation part 29 repeats emission and non-emission of the microwave pulse at the predetermined duty cycle throughout the period while the microwave plasma is sustained. The duty cycle is configured to have an emission time and a non-emission time so that the microwave plasma should not disappear nor become thermal plasma. In each plasma generation part 29, the non-equilibrium microwave plasma is sustained.

The plasma generation operation continues until the electromagnetic wave generation device 21 stops outputting the microwave pulse. The plasma generation operation continues for a period of time of the pulse width (for example, several seconds) of the electromagnetic wave drive signal.

In each passage formation member 41, the microwave plasma is generated in the vicinity of a midpoint between the antenna 27 and the discharger 28. The exhaust gas flowing through the internal passage 40 causes the microwave plasma to drift toward a side of the purification catalyst 31 and to blow out from the outlet of the internal passage 40 toward the side of the purification catalyst 31. The plasma generation device 20 causes a plasma jet to blow out utilizing the exhaust gas flow. The microwave plasma that has blown out from the outlet of the internal passage 40 reaches into the inside of the purification catalyst 31 and comes in contact with catalyst metal (platinum, rhodium, and/or the like) of the purification catalyst 31. As a result of this, the purification catalyst 31 is directly heated by the microwave plasma. In a region in which the microwave plasma is formed, active species such as OH radicals are generated, and the active species come in contact with the catalyst metal of the purification catalyst 31. Although the OH radicals are short in lifetime, since the microwave plasma comes in contact with the purification catalyst 31, a large amount of active species are brought in contact with the catalyst metal. Then, the catalyst metal becomes temporarily oxidized owing to the active species. For example, Pt (platinum) becomes PtO and thus changes into a form easily reactable with the exhaust gas. The exhaust gas passing through the microwave plasma is decomposed into easily oxidizable components. As a result of this, the temperature of the purification catalyst 31 increases while the activation temperature of the purification catalyst 31 decreases. According to the present embodiment, since the electronic control device of the engine outputs the start instruction to the control device 26 at the start-up time of the engine, the time required to activate the purification catalyst 31 at the start-up time of the engine is reduced. Effect of Embodiment

According to the present embodiment, the plasma is generated in the internal passage 40, which is narrower than the exhaust passage 30, so that the diffusion of the plasma toward directions other than the flow direction of the exhaust gas is suppressed, and that the plasma blows out from the outlet 43 of the internal passage 40 toward the side of the purification catalyst 31. Accordingly, it is possible to cause the plasma to effectively come in contact with the purification catalyst 31, and to reduce the time required for the purification catalyst 31 to be activated.

Furthermore, since the plasma is generated in the internal passage 40 at the location in the vicinity of the purification catalyst 31, the penetration length of the plasma into the purification catalyst 31 increases, and the amount of the catalyst metal which comes in contact with the plasma increases in the purification catalyst 31. Accordingly, it is possible to further reduce the time required for the purification catalyst 31 to be activated.

Furthermore, the insulating inner cylindrical member 51 is provided inside of the outer cylindrical member 52 that traps the microwave, thereby narrowing the cross section of the passage in which the plasma is generated so as to confine the plasma energy. Accordingly, since the plasma generated in the internal passage 40 hardly diffuses, it is possible to cause the plasma to effectively blow out toward the side of the purification catalyst 31.

Furthermore, since the electrically-conducting mesh members 45 are provided in the internal passage 40 of the passage formation member 41, the microwave energy is effectively trapped in the internal passage 40. Accordingly, it is possible to generate high density plasma.

### <First Modified Example of Embodiment>

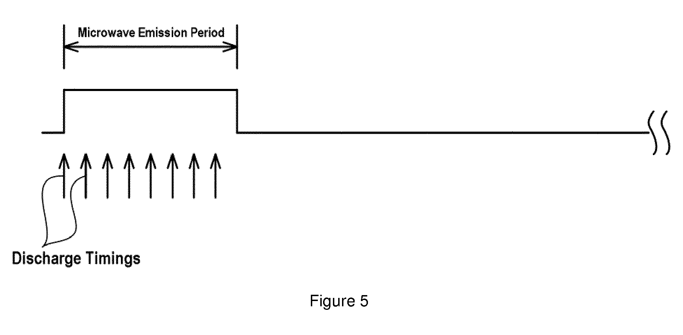

According to the first modified example, as shown in Fig. 5, in each plasma generation part 29, the discharger 28 causes the discharge to repeatedly occur during a microwave emission period in which the microwave pulse is repeatedly emitted from the antenna 27. This means that the discharger 28 causes the discharge to repeatedly occur during a period in which the microwave plasma is to be sustained by the microwave.

According to the first modified example, since free electrons that serve as triggers of the plasma generation are repeatedly emitted, even in a case in which the exhaust gas flow blows off the plasma, the plasma is generated again. Accordingly, it is possible to prevent the exhaust gas flow from unintentionally suppressing and reducing the plasma generation operation for activating the catalyst.

### <Second Modified Example of Embodiment>

According to the second modified example, there are provided a plurality of the electromagnetic wave generation devices 21. For example, the electromagnetic wave generation device 21 is provided for each antenna 27.

### <Third Modified Example of Embodiment>

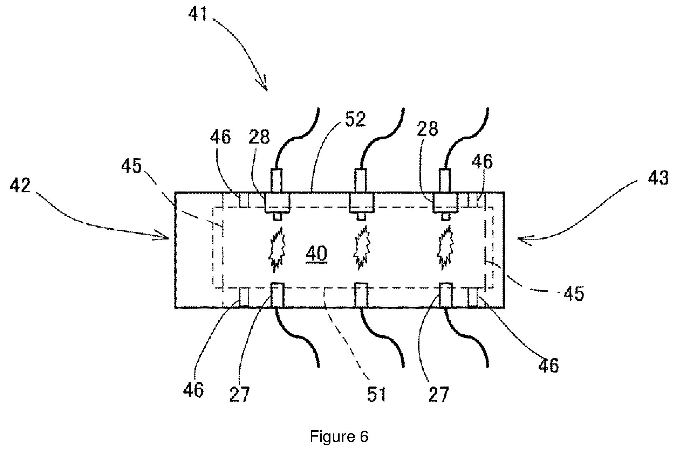

According to the third modified example, as shown in Fig. 6, a plurality of pairs of the antennae 27 and the dischargers 28 are provided for each passage formation member 41.

Furthermore, a group of the electromagnetic wave generation device 21 and the distributor 22 is provided for each passage formation member 41. Accordingly, it is possible to further increase the density of the plasma which blows on the purification catalyst 31.

### <Fourth Modified Example of Embodiment>

According to the fourth modified example, in place of the microwave, a high frequency wave of kilohertz-range band or megahertz-range band lower in frequency than the microwave is employed to generate the plasma. The plasma generation device 20 is equipped with a discharger 28 that causes a discharge to occur in the internal passage 40 and a high frequency generator that supplies high frequency energy to the internal passage 40. The plasma generation device 20 generates plasma by causing the discharger 28 to discharge while supplying the high frequency energy to the internal passage 40 from the high frequency generator. For example, if an ignition plug 28 is arranged in the passage formation member 41, and a high voltage alternating wave is applied between a central electrode and a ground electrode simultaneously with the spark discharge, it is possible to generate comparatively large plasma.

Similarly to the first modified example, the plasma generation device 20 may cause the discharger 28 to discharge repeatedly during the period of supplying the high frequency energy to the internal passage 40 from the high frequency generator. By causing the discharge to occur repeatedly during the period in which the high voltage alternating wave is supplied to the ignition plug 28, even if the exhaust gas flow may blow off the plasma, it is possible to generate the plasma again.

### <Other Embodiments>

The embodiment described above may also be configured as follows.

According to the embodiment described above, the purification catalyst 31 may be a catalyst other than the three way catalyst such as an SCR (Selective Catalytic Reduction) catalyst of the urea SCR system.

Furthermore, material constituting the inner cylindrical member 51 is not necessarily limited to material such as ceramic or glass. As long as the material has insulating properties, any kind of material may be employed.

Furthermore, according to the embodiment described above, the plasma generation device 20 may be applied elsewhere than to the exhaust passage 30 of the engine. For example, the plasma generation device 20 may be applied to an exhaust passage of an incinerator.

Furthermore, according to the embodiment described above, the duty cycle of the microwave pulse may be configured such that the plasma generation part 29 should generate thermal plasma, and the microwave may be emitted continuously.

Furthermore, according to the embodiment described above, the outer cylindrical member 52 may be omitted, and the inner cylindrical member 51 alone may be employed as the passage formation member 41. Alternatively, a plurality of inner cylindrical members 51 may be provided in the outer cylindrical member 52.

Furthermore, according to the embodiment described above, the inner cylindrical member 51 may protrude from an opening of the outer cylindrical member 52 on a side of the inner cylindrical member 51 facing toward the purification catalyst 31.

Furthermore, according to the embodiment described above, the plasma generation part 29 may generate the microwave plasma by way of the microwave alone.

### INDUSTRIAL APPLICABILITY

From the foregoing description, it is to be understood that the present invention is useful in relation to a plasma generation device that generates plasma in an exhaust passage.

### EXPLANATION OF REFERENCE NUMERALS

- 20: Plasma Generation Device
- 27: Antenna (Electromagnetic Wave Generation Unit)
- 28: Discharger
- 29: Plasma Generation Part
- 30: Exhaust Passage
- 31: Purification Catalyst
- 41: Passage Formation Member
- 40: Internal Passage
- 43: Outlet of Internal Passage

## Claims

1. A plasma generation device (20) for generating plasma upstream of a purification catalyst (31) that purifies exhaust gas of an engine in an exhaust passage (30) provided with the purification catalyst (31), comprising:
a passage formation member (41) arranged upstream of the purification catalyst (31) in the exhaust passage (30), and formed with an internal passage (40) that the exhaust gas passes through; and
a plasma generation part (29) that generates the plasma in the internal passage (40), wherein
an outlet part (43) of the internal passage (40) of the passage formation member (41) is located in the vicinity of or in abutting contact with the purification catalyst (31) so that the exhaust gas flowing through the internal passage (40) causes the plasma generated by the plasma generation part (29) to blow out from the outlet (43) of the internal passage (40) to reach the purification catalyst (31);
**characterized in that** the plasma generation part (29) generates the plasma by emitting an electromagnetic wave to the internal passage (40), and
the internal passage (40) of the passage formation member (41) is provided with electrically-conducting mesh members (45) for trapping the electromagnetic wave emitted by the plasma generation part (29) in a region in which the plasma is generated.

## Patentansprüche

1. Plasmaerzeugungsvorrichtung (20) zur Erzeugung von Plasma, die einem Reinigungskatalysator (31) vorgeschaltet ist, der Abgas aus einem Motor in einem mit dem Reinigungskatalysator (31) bereitgestellten Abgasdurchlass (30) reinigt, und die Folgendes umfasst:
ein Durchlassausbildungselement (41), das in dem Abgasdurchlass (30) dem Reinigungskatalysator (31) vorgeschaltet angeordnet und mit einem Innendurchlass (40) ausgebildet ist, durch den das Abgas hindurchtritt; und
ein Plasmaerzeugungsteil (29), das das Plasma in dem Innendurchlass (40) erzeugt, worin
ein Auslassteil (43) des Innendurchlasses (40) des Durchlassausbildungselements (41) in der Umgebung von oder in angrenzendem Kontakt mit dem Reinigungskatalysator (31) angeordnet ist, sodass das durch den Innendurchlass (40) strömende Abgas bewirkt, dass das durch den Plasmaerzeugungsteil (29) erzeugte Plasma aus dem Auslass (43) des Innendurchlasses (40) herausgeblasen wird und den Reinigungskatalysator (31) erreicht;
**dadurch gekennzeichnet, dass** das Plasmaerzeugungsteil (29) das Plasma durch Aussenden einer elektromagnetischen Welle in den Innendurchlass (40) erzeugt und
der Innendurchlass (40) des Durchlassausbildungselements (41) mit elektrisch leitfähigen Netzelementen (45) zum Einfangen der von dem Plasmaerzeugungsteil (29) abgegebenen elektromagnetischen Welle in einer Region, in der das Plasma erzeugt wird, bereitgestellt ist.

## Revendications

1. Dispositif de production de plasma (20) destiné à produire un plasma en amont d'un catalyseur de purification (31) qui purifie des gaz d'échappement d'un moteur dans un passage d'échappement (30) muni du catalyseur de purification (31), comprenant :
un élément de formation de passage (41) disposé en amont du catalyseur de purification (31) dans le passage d'échappement (30), et formé avec un passage interne (40) à travers lequel passent les gaz d'échappement ; et
une partie de production de plasma (29) qui produit le plasma dans le passage interne (40), dans lequel
une partie de sortie (43) du passage interne (40) de l'élément de formation de passage (41) se trouve à proximité ou en contact de butée avec le catalyseur de purification (31), de sorte que les gaz d'échappement circulant à travers le passage interne (40 ) amènent le plasma produit par la partie de production de plasma (29) à être soufflé vers l'extérieur depuis la sortie (43) du passage interne (40) pour atteindre le catalyseur de purification (31) ;
**caractérisé en ce que** la partie de production de plasma (29) produit le plasma par émission d'une onde électromagnétique vers le passage interne (40), et
le passage interne (40) de l'élément de formation de passage (41) est pourvu d'éléments à mailles électriquement conducteurs (45) destinés à piéger l'onde électromagnétique émise par la partie de production de plasma (29) dans une zone dans laquelle le plasma est produit.
